**Europäisches Patentamt**

**European Patent Office**

**Office européen des brevets**

(19)

(11) **EP 1 219 086 B1**

(12) **EUROPÄISCHE PATENTSCHRIFT**

(45) Veröffentlichungstag und Bekanntmachung des Hinweises auf die Patenterteilung:
**02.06.2004 Patentblatt 2004/23**

(51) Int Cl.[7]: **H04L 27/26**, H04L 27/38

(21) Anmeldenummer: **00962437.0**

(86) Internationale Anmeldenummer:
**PCT/EP2000/008623**

(22) Anmeldetag: **04.09.2000**

(87) Internationale Veröffentlichungsnummer:
**WO 2001/026317 (12.04.2001 Gazette 2001/15)**

(54) **VERFAHREN ZUM EMPFANGSSEITIGEN BESTIMMEN DER AMPLITUDENUNGLEICHHEIT UND DES QUADRATURFEHLERS IN EINEM MULTITRÄGERSYSTEM**

METHOD FOR DETERMINING THE AMPLITUDE IMBALANCE AND QUADRATURE ERROR AT THE RECEIVING END IN A MULTI-CARRIER SYSTEM

PROCEDE POUR LA DETERMINATION COTE RECEPTION DU DESEQUILIBRE D'AMPLITUDE ET DE L'ERREUR DE QUADRATURE DANS UN SYSTEME MULTIPORTEUSE

(84) Benannte Vertragsstaaten:
**AT BE DE FR GB**

(30) Priorität: **07.10.1999 DE 19948383**

(43) Veröffentlichungstag der Anmeldung:
**03.07.2002 Patentblatt 2002/27**

(73) Patentinhaber: **Rohde & Schwarz GmbH & Co. KG D-81671 München (DE)**

(72) Erfinder:
• **BALZ, Christoph**
  **81543 München (DE)**
• **HOFMEISTER, Martin**
  **80797 München (DE)**

(74) Vertreter: **Körfer, Thomas, Dipl.-Phys. et al Mitscherlich & Partner, Patent- und Rechtsanwälte, Sonnenstrasse 33 80331 München (DE)**

(56) Entgegenhaltungen:
EP-A- 0 324 581          WO-A-97/27695
US-A- 5 233 479          US-A- 5 471 508

• KIM Y -J ET AL: "A NEW FAST SYMBOL TIMING RECOVERY ALGORITHM FOR OFDM SYSTEMS" IEEE TRANSACTIONS ON CONSUMER ELECTRONICS,IEEE INC. NEW YORK,US, Bd. 44, Nr. 3, August 1998 (1998-08), Seiten 1134-1141, XP000851631 ISSN: 0098-3063

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 219 086 B1

**Beschreibung**

Die Erfindung betrifft ein Verfahren laut Oberbegriff des Hauptanspruches.

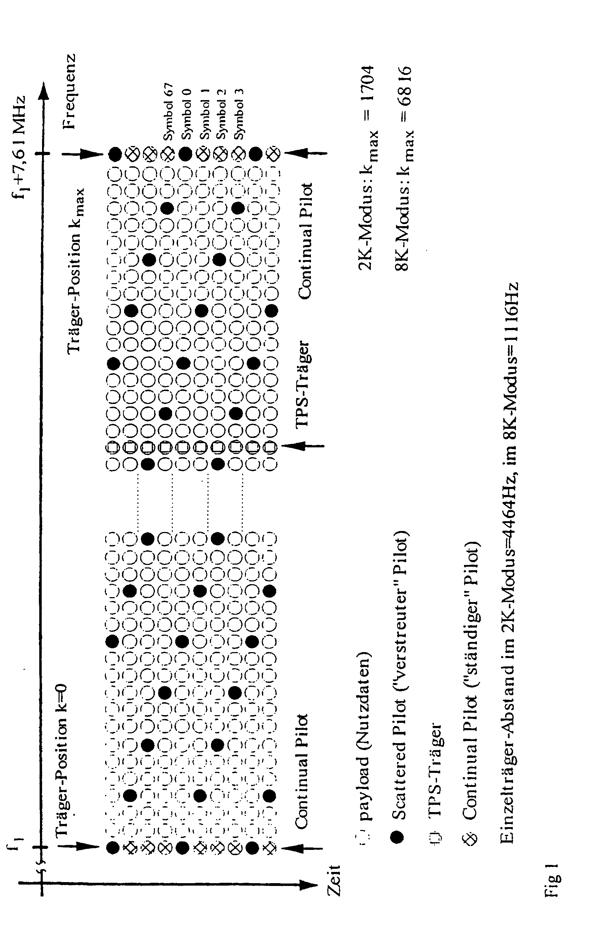

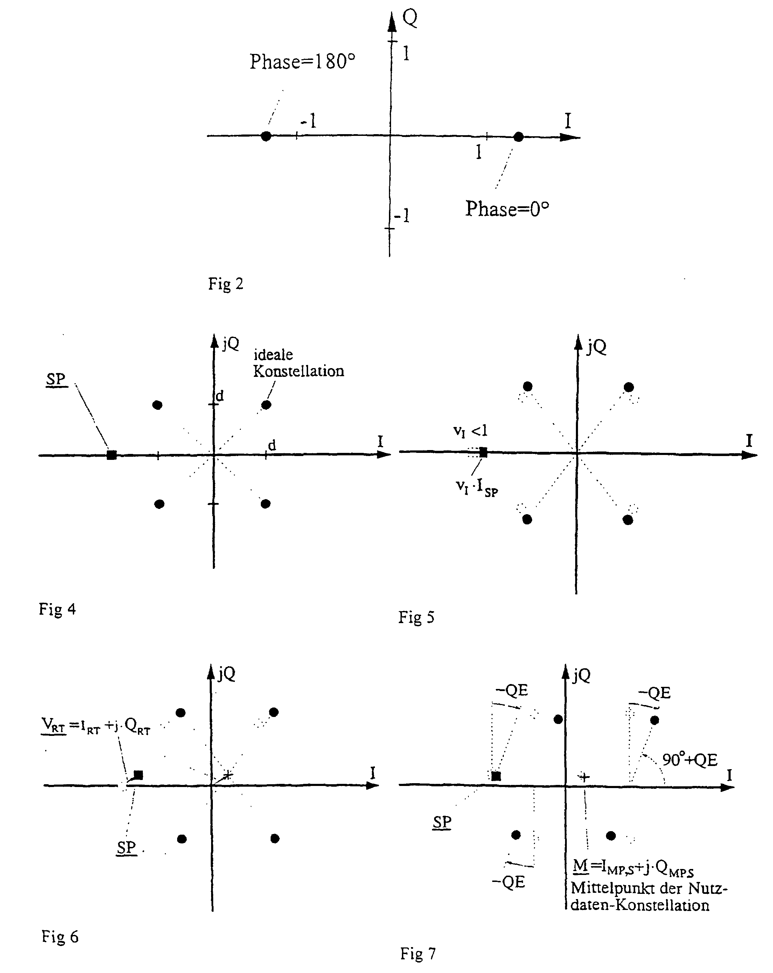

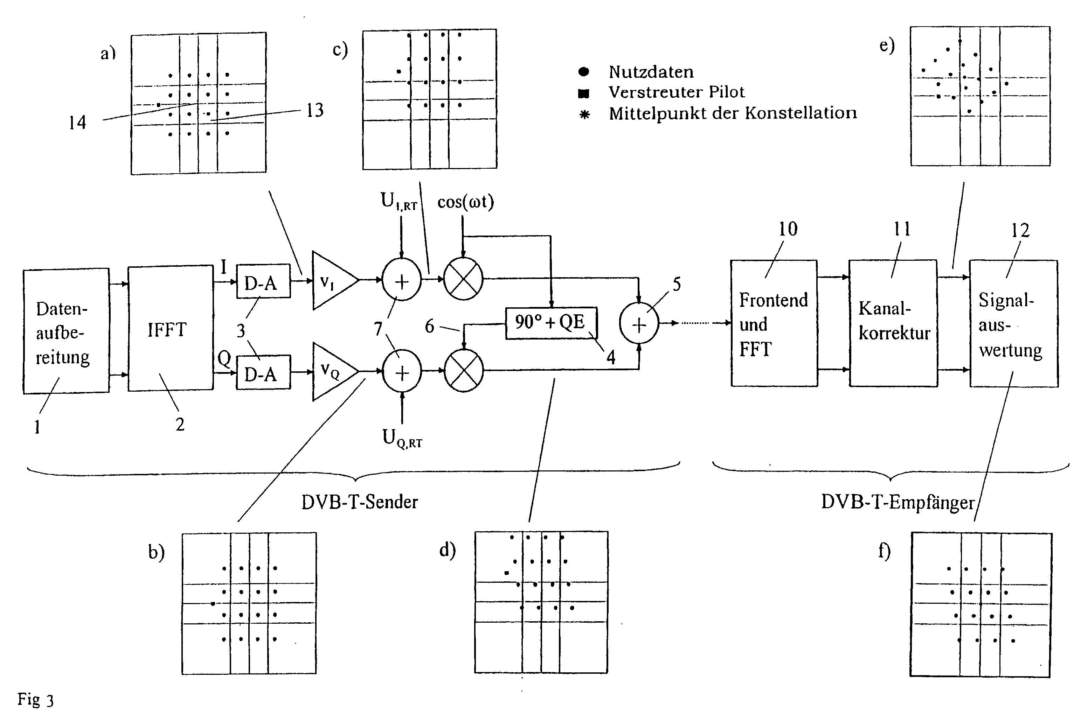

Der sogenannte DVB-T-Standard beschreibt ein Multiträger-Signal, dessen Einzelträger mit den Nutzdaten QAM-moduliert, beispielsweise QPSK, 16QAM oder 64QAM-moduliert sind. Die Anzahl der verwendeten mit k numerierten Einzelträger ist abhängig vom Modus der eingesetzten Fouriertransformation (FFT). Im 2K-Modus ist k = (0... 1704). Die Gesamtheit aller innerhalb eines festen Zeitbereiches gesendeten Einzelträger wird als Symbol bezeichnet, wie dies Figur 1 zeigt. Innerhalb dieses Trägerbereiches sind einige der Träger mit zusätzlichen Informationen über den verwendeten FFT-Modus, der QAM-Ordnung etc. 2PSK-moduliert, diese Träger werden als TPS-Träger (Transmission Parameter Signalling) bezeichnet. Außerdem sind zahlreiche Einzelträger unmoduliert, die mit erhöhter Amplitude gesendet werden und eine starre Phase von 0° bzw. 180° gemäß Figur 2 besitzen und als ständige Pilote (Continual Pilot) bezeichnet werden. Eine weitere Pilotart wird als verstreute Pilote (Scattered Pilot) bezeichnet, die ebenfalls mit erhöhter Amplitude und einer starren Phase von 0° bzw. 180° gesendet werden und über den Trägerbereich gleichmäßig verteilt und an wechselnden Positionen innerhalb dieses Trägerbereiches von einem Symbol zum nächsten auftreten. Mit Hilfe dieser verstreuten Pilote wird eine empfängerseitige Kanalkorrektur eines gestörten DVB-T-Signals mittels Interpolation entlang der Frequenz- und Zeitachse durchgeführt. Anhand der Konstellationen eines oder mehrerer QAM-modulierter Einzelträger können verschiedene Übertragungsparameter ermittelt werden.

Einzelträger, die zwischenzeitlich einen verstreuten Pilot enthalten, sind aufgrund des festgelegten Standards während 75 % der Zeit mit Nutzdaten moduliert und während der restlichen 25% der Zeit stellen sie einen Pilot dar. Bei der Kanalkorrektur werden alle empfangenen von der Ideallage in der I/Q-Ebene abweichenden Pilotsignale mit einem komplexen Faktor derart multipliziert, daß die Position des Pilotsignals in der I/Q-Ebene mit dessen Ideallage übereinstimmt. Alle eventuell auf demselben Träger sich befindenden Nutzdatensignale werden mit demselben Faktor multipliziert.

Figur 3 zeigt den Prinzipaufbau einer Sender-Empfänger-Strecke eines nach dem DVB-T-Standard im 2K-Modus arbeitenden Digital Video Broadcast Systems (DVB). In einer Datenaufbereitungsstufe 1 werden die zu übertragenden digitalen Videosignale im Frequenzbereich aufbereitet und anschließend durch inverse Fouriertransformation (IFFT) in den Zeitbereich umgerechnet. Die so erzeugten I- und Q-Anteile werden nach Digitalisierung in D-A-Wandlern 3 und Verstärkung in Verstärkern mit den Verstärkungsfaktoren $v_I$ und $v_Q$ einem Quadraturmischer 6 zugeführt, in welchem sie mit den 90° gegeneinander phasenverschobenen Anteilen eines Trägersignals 4 auf die gewünschte Ausgangsfrequenz hochgemischt und in einem Addierer 5 wieder zusammengefaßt und dann abgestrahlt werden.

Im Empfänger erfolgt eingangsseitig wieder in der Eingangsstufe 10 eine Rückumsetzung des empfangenen Eingangssignals aus dem Zeitbereich in den Frequenzbereich über FFT, anschließend wird in einer Korrekturstufe 11 die beschriebene Kanalkorrektur mit Hilfe der verstreuten Pilote durchgeführt, d.h. die empfangenen verstreuten Pilote werden so korrigiert, daß sie empfangsseitig in der I/Q-Ebene die Ideallage einnehmen, wie dies Figur 4 zeigt. In einer anschließenden Signalauswerteinrichtung 12 werden die empfangenen Videosignale weiterverarbeitet.

In Figur 3 sind die verschiedenen Einflußmöglichkeiten von Amplitudenimbalance, Quadraturfehler und Restträger eingezeichnet, die bei einem solchen DVB-T-Sender auftreten können. Figur 3a zeigt die ideale Nutzdatenkonstellation eines Einzelträgers, beispielsweise des zentralen Trägers. Die einzelnen I/Q-Werte der Nutzdaten liegen jeweils an ihren vorgegebenen Stellen in den eingezeichneten Entscheidungsfeldern 13 und zwar symmetrisch zum Mittelpunkt 14 der I/Q-Ebene (Koordinatenmittelpunkt).

Wenn die beiden Verstärker $v_I$ und $v_Q$ nicht exakt gleiche Verstärkung aufweisen, wird eine Amplitudenimbalance erzeugt, die sich in einer Verschiebung der Nutzdatenlage innerhalb der Entscheidungsfelder gemäß Figur 3b bemerkbar macht.

In den I- und Q-Zweigen können auch noch störende Gleichspannungsanteile auftreten, wie dies in Figur 3 durch die Addierstufen 7 und die Spannungen $U_{I.RT}$ und $U_{Q.RT}$ angedeutet ist. Diese führen zu einem störenden Restträger, der eine Verschiebung der Nutzdatenkonstellation erzeugt, wie dies Figur 3c zeigt.

Durch einen Quadraturfehler (die beiden um 90° gegeneinander phasenverschobenen Träger des Quadraturmischers sind nicht exakt 90° verschoben), verbunden mit dem erwähnten Amplitudenimbalancefehler der Verstärker und einem störenden Gleichspannungsanteil, der sich als Restträger bemerkbar macht, entsteht eine Nutzdaten-Konstellation nach Figur 3d, bei der die gesamte Nutzdaten-Konstellation nicht nur verschoben und verdreht ist, sondern bei der auch der verstreute Pilot nicht mehr seine Ideallage besitzt.

Wenn eine gestörte Nutzdatenkonstellation gemäß Figur 3d zum Empfänger übertragen wird, so wird zunächst durch die bekannte Kanalkorrektur 11 der verstreute Pilot wieder in eine Ideallage zurückgebracht, wie dies Figur 3e zeigt. Die übrigen Nutzdaten sind weiterhin verdreht und verschoben.

Die erwähnten Beeinträchtigungen der Nutzdatenkonstellation gemäß Figur 3 gelten auch für den zentralen Träger, der im Basisband bei der Frequenz f = 0 liegt. Ein senderseitig durch Gleichspannungsanteile hervorgerufener Restträger verursacht deshalb eine Verschiebung der Konstellation speziell des zentralen Trägers. Da dieser zentrale Träger im 2K-Modus mit Nutzdaten moduliert ist und zwischenzeitlich einen verstreuten Pilot darstellt (Phase = 180°), wird nach einer Kanalkorrektur eine gestreckte bzw. gestauchte und verschobene bzw. gedrehte Konstellation der Nutzdaten auch des zentralen Trägers eintreten. Dieser Einfluß kann so groß werden, daß einzelne oder mehrere I/Q-Werte ihre zugehörigen Entscheidungsfelder verlassen.

Es ist Aufgabe der Erfindung, ein Verfahren aufzuzeigen, mit dem erstens solche beeinträchtigten Nutzdatenkonstellationen empfangsseitig bestimmt werden können und damit die Restträgerleistung berechnet und/oder die Demodulationseigenschaften des Empfängers verbessert werden können.

Diese Aufgabe wird ausgehend von einem Verfahren laut Oberbegriff des Hauptanspruches durch dessen kennzeichnende Merkmale gelöst. Vorteilhafte Weiterbildungen einerseits für die Restträgerleistungsberechnung bzw. Demodulationsverbesserung ergeben sich aus den Unteransprüchen.

Mit dem erfindungsgemäßen Verfahren kann durch einfache Auswertung der Nutzdaten des zentralen Trägers die Restträgerleistung berechnet werden und zwar unter Berücksichtigung des Einflusses durch die Amplitudenimbalance und den Quadraturfehler. Außerdem können durch einfaches Verdrehen und Stauchen bzw. Strecken der ermittelten Nutzdatenkonstellation die durch die senderseitigen Fehler erzeugten Veränderungen wieder kompensiert werden und so die Demodulationseigenschaften verbessert werden.

Die Erfindung wird im Folgenden anhand weiterer schematischer Zeichnungen an einem Ausführungsbeispiel näher erläutert.

Figur 4 zeigt die ideale Nutzdatenkonstellation des QPSK-modulierten zentralen Trägers im 2K-Modus und die ideale Lage des verstreuten Piloten $\underline{SP}$ mit 180° Phasenverschiebung. Figur 5 zeigt die Veränderung dieser idealen Konstellation und Lage unter dem Einfluß einer Amplitudenimbalance, wenn beispielsweise der eine Verstärker im 1-Zweig eine Verstärkung von $v_I = 0,9$ und im Q-Zweig $v_Q = 1,2$ aufweist. Die ideale Lage ist in Figur 5 durch $I_{SP}$ dargestellt.

Wenn noch ein Restträger mit der Inphase-Komponente $I_{RT}$ und der Quadraturphasen-Komponente $Q_{RT}$ hinzu kommt, wird noch eine zusätzliche Verschiebung gemäß Figur 6 erreicht.

Figur 7 zeigt schließlich die Konstellation und Lage des verstreuten Piloten $\underline{SP}$ unter dem Einfluß einer Amplitudenimbalance ($\downarrow v_I$=0,9, $\downarrow v_Q$=1.2) sowie mit einem Restträger mit $I_{RT}$=0,3d und $Q_{RT}$=0,4d und einem zusätzlichen Quadraturfehler QE=20°. wobei d der Abstand vom Mittelpunkt eines Entscheidungsfeldes bis zu dessen Rand ist. Durch das Zusammenwirken dieser Fehler wird die Nutzdatenkonstellation und Lage des verstreuten Piloten gemäß Figur 7 verschoben und verdreht und auch der Mittelpunkt der Nutzdatenkonstellation entsprechend verschoben.

Gemäß der Erfindung werden empfangsseitig diese Verschiebungen bestimmt. Dazu werden in einem ersten Verfahrensschritt zunächst die Auftrittshäufiskeiten aller I/Q-Werte der Nutzdaten des zentralen Trägers ermittelt und in einem zweidimensionalen Array in der Signalauswerteinrichtung 12 abgelegt. Daraus wird dann der Mittelpunkt $\underline{M}$ der Nutzdaten-Konstellation ermittelt, wie dies Figur 7 zeigt. Dazu wird der I-Anteil des Mittelpunktes durch eine mit dem jeweils momentanen I-Wert gewichtete Summierung der Auftrittshäufigkeiten und eine darauffolgende Division durch die Summe aller in dem Array abgelegten Auftrittshäufigkeiten berechnet. Analog wird der Q-Anteil des Mittelpunktes ermittelt. Dazu ist eine hohe Anzahl von I/Q-Meßwerten Voraussetzung.

Durch die an sich bekannte Kanalkorrektur 11 im Empfänger besitzt der verstreute Pilot bereits seine ideale Lage. Damit kann in einem zweiten Verfahrensschritt die gesamte Konstellation der Nutzdaten des zentralen Trägers so gedreht und gestreckt bzw. gestaucht werden, daß der Mittelpunkt der somit neu entstandenen Nutzdatenkonstellation mit dem Koordinatenursprung der I/Q-Ebene zusammenfällt. Das Streck- und Rotationszentrum ist dabei die vorher schon korrigierte ideale Lage des verstreuten Piloten.

Durch diesen zweiten Verfahrensschritt ist gewährleistet, daß möglichst alle I/Q-Werte wieder innerhalb ihrer Entscheidungsfelder 13 liegen. Auf diese Weise kann die Demodulation empfangsseitig verbessert werden. was sich in einer höheren Übertragungssicherheit bemerkbar macht.

Auch der Amplitudenimbalancefehler kann auf einfache Weise berechnet werden. Dazu wird zu jedem Entscheidungsfeld mit Hilfe der Auftrittshäufigkeiten der I/Q-Werte innerhalb des Entscheidungsfeldes ein Mittelpunkt berechnet. Durch diese Mittelpunkte aller jeweils auf einer Horizontalen sowie Vertikalen liegenden benachbarten Entscheidungsfelder lassen sich Regressionsgeraden legen. Aus dem Verhältnis der mittleren Abstände der in horizontaler und vertikaler Richtung liegenden Geraden läßt sich der vom Sender hervorgerufene Amplitudenimbalancefehler berechnen. Der Quadraturfehler kann auf ähnliche Weise berechnet werden und zwar aus der Differenz der mittleren Steigungen der in horizontaler und vertikaler Richtung liegenden Geraden.

Aus der Bestimmung des Mittelpunktes der Nutzdaten-Konstellation des zentralen Trägers kann außerdem auf einfache Weise empfangsseitig die Restträgeramplitude unter Berücksichtigung von Amplitudenimbalancefehler und Qudraturfehler berechnet werden.

Die Inphase- und Quadraturphase-Komponente des Mittelpunkts $I_{MP.S} + j \cdot Q_{MP.S}$ der gesendeten Konstellation, welche beeinflußt wird durch Amplitudenimbalance ($v_I$ und $v_Q$), einen Restträger $I_{RT} + j \cdot Q_{RT}$ und einen Quadraturfehler QE, lassen sich folgendermaßen ermitteln:

$$I_{MP.S} = I_{RT} + Q_{RT} \cdot \sin(-QE) = I_{RT} - Q_{RT} \cdot \sin(QE)$$

$$Q_{MP.S} = Q_{RT} \cdot \cos(QE)$$

$$(A.1)$$

Die Amplitudenimbalance beeinflußt die Lage des Konstellationsmittelpunkts nicht, weshalb die Faktoren $v_I$ und $v_Q$ in den Gleichungen nicht auftauchen. Entsprechend ergibt sich unter diesen Einflüssen für die Lage des gesendeten verstreuten Pilots $I_{SP.S} + j \cdot Q_{SP.S}$ ($I_{SP}$: idealer Inphasewert des verstreuten Pilots):

$$I_{SP.S} = v_I \cdot I_{SP} + I_{RT} - Q_{RT} \cdot \sin(QE)$$

$$Q_{SP.S} = Q_{RT} \cdot \cos(QE)$$

$$(A.2)$$

Die Beziehungen (A.1) und (A.2) zeigen:

$$I_{SP.S} = I_{MP.S} + v_I \cdot I_{SP}$$

$$Q_{SP.S} = Q_{MP.S}$$

$$(A.3)$$

Bei der Kanalkorrektur wird nun $I_{SP.S} + j \cdot Q_{SP.S}$ durch Multiplikation mit

$$\frac{I_{SP}}{I_{SP.S} + j \cdot Q_{SP.S}}$$

abgebildet auf seine ideale Lage $I_{SP}$. Genau so wird auch mit allen Punkten der Konstellation der Nutzdaten verfahren. Damit gilt auch für den Mittelpunkt der Konstellation $\underline{MP} = I_{MP} + j \cdot Q_{MP}$ :

$$\underline{MP} = (I_{MP.S} + j \cdot Q_{MP.S}) \cdot \frac{I_{SP}}{I_{SP.S} + j \cdot Q_{SP.S}}$$

$$\Rightarrow I_{MP} + j \cdot Q_{MP} = (I_{MP.S} + j \cdot Q_{MP.S}) \cdot \frac{I_{SP}}{(I_{MP.S} + j \cdot Q_{MP.S} + v_I \cdot I_{SP}}$$

Durch Umformungen und Aufteilen in Real- und Imaginärteil ergibt sich ein Gleichungssystem:

$$(1) \qquad I_{SP} \cdot I_{MP.S} = I_{MP.S} \cdot I_{MP} - Q_{MP.S} Q_{MP} + v_I \cdot I_{MP} \cdot I_{SP}$$

$$(2) \qquad I_{SP} \cdot Q_{MP.S} = Q_{MP.S} \cdot I_{MP} + I_{MP.S} \cdot Q_{MP} + v_I \cdot I_{SP} \cdot Q_{MP}$$

Nach Einsetzen der beiden Beziehungen von (A.1) erhält man:

$$(1) \qquad I_{SP} \cdot [I_{RT} - Q_{RT} \cdot \sin(QE)] = I_{MP} \cdot [I_{RT} - Q_{RT} \cdot \sin(QE)] - Q_{MP} \cdot Q_{RT}(QE) + v_I \cdot I_{MP} \cdot I_{SP}$$

$$(2) \qquad I_{SP} \cdot Q_{RT} \cdot \cos(QE) = I_{MP} \cdot Q_{RT} \cdot \cos(QE) + Q_{MP} \cdot [I_{RT} - Q_{RT} \sin(QE)] + v_I \cdot I_{SP} \cdot Q_{MP}$$

Auflösen von Gleichung (2) nach $Q_{RT}$ :

$$Q_{RT} = \frac{I_{RT} \cdot Q_{MP} + v_I \cdot I_{SP} \cdot Q_{MP}}{I_{SP} \cdot \cos(QE) - I_{MP} \cdot \cos(QE) + Q_{MP} \cdot \sin(QE)} \cdot \qquad (A.4)$$

Durch Einsetzen von (A.4) in Gleichung (1) und Auflösen nach $I_{RT}$ ergibt sich:

$$I_{RT} = v_I \cdot I_{SP} \cdot \frac{[I_{MP} \cdot I_{SP} - I_{MP}^2 - Q_{MP}^2] \cdot \cos(QE) + I_{SP} \cdot Q_{MP} \cdot \sin(QE)}{[(I_{SP} - I_{MP})^2 + Q_{MP}^2] \cdot \cos(QE)} \qquad (A.5)$$

Dieses Ergebnis wird eingesetzt in Beziehung (A.4) und vereinfacht:

$$Q_{RT} = v_I \cdot I_{SP}^2 \cdot \frac{Q_{MP}}{[(I_{SP} - I_{MP})^2 + Q_{MP}^3] \cdot \cos(QE)} \qquad (A.6)$$

mit

$I_{RT}$:     Inphase-Komponente der Restträgeramplitude.
$Q_{RT}$:     Quadraturphase-Komponente der Restträgeramplitude.
$v_I$:     Verstärkung der Inphase-Komponente im Sender (Amplitudenimbalance),
QE:     Quadraturfehler (inklusive Vorzeichen).
$I_{SP}$:     Inphase-Komponente des idealen verstreuten Pilots.
$I_{MP}$:     Inphase-Komponente des Konstellationsmittelpunkts nach der Kanalkorrektur,
$Q_{MP}$:     Quadraturphase-Komponente des Konstellationsmittelpunkts nach der Kanalkorrektur.

**Patentansprüche**

1. Verfahren zum empfangsseitigen Bestimmen der Nutzdatenkonstellation eines nach dem DVB-T-Standard im 2K-Modus QAM-modulierten Multiträger-Signals, das einen in der Mitte der Einzelträger liegenden zentralen Träger aufweist, der zeitweise mit Nutzdaten moduliert ist und zeitweise einen verstreuten Piloten darstellt, **dadurch gekennzeichnet,** **daß** die Auftrittshäufigkeit aller I/Q-Werte des Nutzdatenanteiles des zentralen Trägers ermittelt und dann der Mittelpunkt dieser Nutzdaten-Konstellation bestimmt wird.

2. Verfahren nach Anspruch 1, **dadurch gekennzeichnet,** **daß** zur Ermittlung des Mittelpunktes der Nutzdaten-Konstellation des zentralen Trägers der jeweils momentane I- bzw. Q-Wert mit der Auftrittshäufigkeit gewichtet summiert und anschließend durch die Summe aller Auftrittshäufigkeiten dividiert wird.

3. Verfahren nach Anspruch 1 oder 2, **dadurch gekennzeichnet,** **daß** aus dem berechneten Mittelpunkt der Nutzdaten-Konstellation und dem Koordinatenursprung der I/Q-Ebene die Leistung des vom Sender übertragenen Restträgers berechnet wird.

4. Verfahren nach Anspruch 1 oder 2, **dadurch gekennzeichnet,** **daß** die mit ihrem Mittelpunkt ermittelte Nutzdaten-Konstellation um die ideale Lage des verstreuten Piloten so gedreht und gestaucht bzw. gestreckt wird, daß der Mittelpunkt der so gewonnenen neuen Nutzdatenkonstellation mit dem Koordinatenursprung der I/Q-Ebene zusammenfällt.

5. Verfahren nach einem der vorhergehenden Ansprüche, **dadurch gekennzeichnet,** **daß** zu jedem Entscheidungsfeld der I/Q-Werte der Nutzdaten des zentralen Trägers mit Hilfe der Auftrittshäufigkeiten dieser I/Q-Werte innerhalb des Entscheidungsfeldes jeweils ein Mittelpunkt im Entscheidungsfeld berechnet wird, durch diese jeweils auf einer Horizontalen bzw. Vertikalen liegenden Mittelpunkte der benachbarten Entscheidungsfelder Geraden gelegt werden und aus dem Verhältnis der mittleren Abstände dieser horizontalen und vertikalen Geraden jeweils der vom Sender hervorgerufene Amplituden-Imbalance-Fehler berechnet wird.

**6.** Verfahren nach Anspruch 5,
**dadurch gekennzeichnet,**
**daß** aus der Differenz der mittleren Steigungen der horizontalen und vertikalen Geraden der senderseitig hervorgerufene Quadratur-Fehler berechnet wird.

## Claims

**1.** Method for receiver-end determination of the useful-data configuration of a QAM-modulated multi-carrier signal modulated according to the DVB-T standard in the 2K mode, which provides a central carrier disposed in the centre of the individual carrier, which is intermittently modulated with useful data and intermittently represents a scattered pilot,
**characterised in that**
the frequency of occurrence of all I/Q-values of the useful data component of the central carrier is determined, and that the midpoint of this useful-data configuration is then determined.

**2.** Method according to claim 1,
**characterised in that**
in order to determine the midpoint of the useful-data configuration of the central carrier, the momentary I value and/or Q value in each case is summated after weighting with the frequency of occurrence and then divided by the sum of all frequencies of occurrence.

**3.** Method according to claim 1 or 2,
**characterised in that**
the power of the residual carrier transmitted by the transmitter is calculated from the calculated midpoint of the useful-data configuration and the coordinate origin of the I/O plane.

**4.** Method according to claim 1 or 2,
**characterised in that**
the useful-data configuration determined with its midpoint is rotated, compressed and/or stretched around the ideal position of the scattered pilot in such a manner that the midpoint of the new useful-data configuration obtained in this manner coincides with the coordinate origin of the I/Q plane.

**5.** Method according to any one of the preceding claims
**characterised in that**
for every decision field of the I/Q values of the central carrier, a midpoint is calculated in the decision field using the frequency of occurrence of these I/Q values within each decision field; that straight lines are drawn through these midpoints of the adjacent decision fields disposed in each case on a horizontal and/or vertical line; and that the amplitude imbalance error caused in each case by the transmitter is calculated from the ratio of the mean distances between these horizontal and vertical lines.

**6.** Method according to claim 5,
**characterised in that**
the quadrature error produced at the transmitter end is calculated from the difference between the mean gradients of the horizontal and vertical straight lines.

## Revendications

**1.** Procédé pour déterminer, côté réception, l'ensemble de données utiles d'un signal à porteuses multiples modulé selon une modulation QAM dans le mode 2K conformément à la norme DVB-T et qui possède une porteuse centrale située au centre des porteuses individuelles et est modulé par moments avec des données utiles et représente par moments un pilote dispersé, **caractérisé en ce**
**qu'**on détermine la fréquence d'apparition de toutes les valeurs I/Q de la composante de données utiles de la porteuse centrale, et

qu'on détermine ensuite le centre de cet ensemble de données utiles.

2. Procédé selon la revendication 1, **caractérisé en ce que** pour déterminer le centre de l'ensemble de données utiles de la porteuse centrale, la valeur instantanée respective I ou Q est sommée d'une manière pondérée avec la fréquence d'apparition et ensuite est divisée par la somme de toutes les fréquences d'apparition.

3. Procédé selon la revendication 1 ou 2,
**caractérisé en ce**
**que** la puissance de la porteuse résiduelle transmise par l'émetteur est calculée à partir du centre calculé de l'ensemble de données utiles et de l'origine des coordonnées du plan I/Q.

4. Procédé selon la revendication 1 ou 2,
**caractérisé en ce**
qu'on fait tourner et on comprime ou on étire l'ensemble de données utiles déterminé avec son centre, autour de la position idéale du pilote dispersé de telle sorte que le centre du nouvel ensemble de données utiles ainsi obtenu coïncide avec l'origine des coordonnées du plan I/Q.

5. Procédé selon l'une des revendications précédentes, **caractérisé en ce**
**que** pour chaque champ de décision des valeurs I/Q des données
utiles de la porteuse centrale on calcule, à l'aide des fréquences d'apparition de ces valeurs I/Q, à l'intérieur du champ de décision, respectivement un centre dans le champ de décision, au moyen duquel on dispose des droites passant par ces centres situés respectivement sur une horizontale ou une verticale, des champs de décision voisins et à partir du rapport des distances moyennes de ces droites horizontale et verticale, on calcule respectivement les erreurs de déséquilibre d'amplitude provoquées par l'émetteur.

6. Procédé selon la revendication 5, **caractérisé en ce**
qu'à partir de la différence des pentes moyennes des droites horizontale et verticale on calcule l'erreur de quadrature provoquée côté émetteur.

Fig 1

$f_1$

$f_1 + 7,61$ MHz

Träger-Position k=0

Träger-Position $k_{max}$

Frequenz

Symbol 67
Symbol 0
Symbol 1
Symbol 2
Symbol 3

Continual Pilot

TPS-Träger

Continual Pilot

Zeit

payload (Nutzdaten)

Scattered Pilot ("verstreuter" Pilot)

TPS-Träger

Continual Pilot ("ständiger" Pilot)

Einzelträger-Abstand im 2K-Modus=4464Hz, im 8K-Modus=1116Hz

2K-Modus: $k_{max} = 1704$

8K-Modus: $k_{max} = 6816$

EP 1 219 086 B1

Fig 2

Fig 4

Fig 5

Fig 6

Fig 7

Fig 3

EP 1 219 086 B1